# EUROPEAN PATENT SPECIFICATION

(11) **EP 2 966 540 B1**
(45) Date of publication and mention of the grant of the patent: **24.10.2018**
(21) Application number: 14760776.6
(22) Date of filing: 27.02.2014
(51) Int. Cl.: G06F 1/32, H04W 52/02

(54) **ELECTRONIC APPARATUS, POWER SUPPLY CONTROL METHOD, AND PROGRAM**
ELEKTRONISCHE VORRICHTUNG, STROMVERSORGUNGSSTEUERUNGSVERFAHREN UND PROGRAMM
APPAREIL ÉLECTRONIQUE, PROCÉDÉ DE COMMANDE D'ALIMENTATION ÉLECTRIQUE ET PROGRAMME

(30) Priority: 04.03.2013 JP 2013042349
(43) Date of publication of application: 13.01.2016
(73) Proprietor: NEC CORPORATION, Minato-ku, Tokyo 108-8001 (JP)
(72) Inventor: MIZOGUCHI, Naoki, Kawasaki-shi, Kanagawa 211-8666 (JP)
(74) Representative: Vossius & Partner Patentanwälte Rechtsanwälte mbB
(86) International application number: PCT/JP2014/001049
(87) International publication number: WO 2014/136405

(56) References cited:
- JP-A- 2005 025 364
- JP-A- 2012 043 249
- JP-A- 2013 045 338
- US-A- 5 928 365
- US-A1- 2008 320 203

## Description

The present invention relates to an electronic apparatus, a power supply control method, and a program which controls power consumption in memory.

In recent years, portable telephones and electronic apparatuses, such as a portable information terminal, are generally inclined to be small-sized having advanced features such as being equipped with a high-speed CPU and increased memory capacity. In such electronic devices, there is a problem in that power consumption in memory increases as a result of many programs occupying the above memory. Particularly, in the case of being battery powered, maintenance of the continuous use time and prolongation of the battery are difficult with the increased power consumption. Consequently, a technique for attaining reduction of power consumption in an electronic apparatus including battery powered devices has been proposed.

For example, JP2007-181178 A (Patent Document 1) proposes a technology in which when the battery remaining amount is equal to or greater than a first threshold, data communication is performed through a wireless LAN connection. When the battery remaining amount is less than the first threshold, a screen for recommending connection through cellular connection is displayed on a display. Further, when the battery remaining amount becomes less than a second threshold and which is less than the first threshold, a predetermined power saving operation is performed.

Also, JP2000-172386 A (Patent Document 2) proposes a technology whereby garbage collection is performed for consolidating free space which is scattered in memory into a single continuous free space at every interval defined in advance or predetermined timing, and the power supply to the memory bank of free space is suspended.

Moreover, JP-05-189096 A (Patent Document 3) proposes a technology in which when a voltage reduction in the power source of a main battery is detected, an operation suspend signal is outputted for unnecessary software processing currently being executed from among those devices which constitute a computer system. The power source of the same devices is turned OFF, and the computer system mode is switched to a low current consumption mode.

US 5,928,365 A relates to a computer system and a corresponding power management method for realizing a software control of the power supply with respect to the main memory according to a program's main memory utilization state.

US 2008/0320203 A1 relates to a computing device incorporating memory such as mobile SDRAM, wherein regions of memory are identified which are allocated but inactive.

However, in the above-mentioned Patent Documents 1 and 3 there is a problem in that power saving in memory was not taken into consideration. During multi-processing execution of a plurality of applications, etc., power consumption in memory cannot be reduced.

Further, in Patent Document 2 garbage collection is performed for consolidating free space into a single continuous free space. Although power saving in memory was taken into consideration, power is consumed by the garbage collection itself. Also, in Patent Document 2 there is a problem in that although memory capacity tends to increase, garbage collection is started according to time and power consumption in memory cannot be sufficiently reduced. Further, in Patent Document 2 there is a problem in that even when there is an application in a waiting state or essentially not operating though started in memory, because power is still being supplied to the same memory space, power consumption in memory cannot be sufficiently reduced.

Accordingly, an object of the present invention is to provide an electronic apparatus, a power supply control method, and a program that can reduce power consumption in memory.

In one aspect an electronic apparatus is provided, comprising: a storage section which has a predetermined memory space; a memory management section which judges the operation condition of an application program and locates the application in the predetermined memory space, when it is judged to be in a predetermined operation condition; and a control section which suspends power supply to the predetermined memory space wherein the memory management section judges the condition in which the application program has not executed any operation either continuously or intermittently to be the predetermined operation condition.

In another aspect a power supply control method is provided, including:
a step of assigning a predetermined memory space in a storage section of an electronic apparatus;
a step of judging the operation condition of an application program and locating the application program in the predetermined memory space, when it is judged to be in a predetermined operation condition; and a step of suspending power supply to the predetermined memory space, wherein the condition in which the application program has not executed any operation either continuously or intermittently is judged to be the predetermined operation condition.

In another aspect a program is provided, causing a computer of an electronic apparatus comprising a storage section to execute: a function of assigning a predetermined memory space in the storage section; a function of judging the operation condition of an application program and locating the application program in the predetermined memory space, when it is judged to be in a predetermined operation condition; and a function of suspending power supply to the predetermined memory space, wherein the condition in which the application program has not executed any operation either continuously or intermittently is judged to be the predetermined operation condition.

According to the present invention, power consumption in memory can be reduced.

### BRIEF DESCRIPTION OF DRAWINGS

FIG. 1 is a block diagram illustrating the structure of an electronic apparatus 1 according to a first embodiment of the present invention;
FIG. 2 is a flowchart for explaining operation of the electronic apparatus 1 according to the first embodiment;
FIG. 3 is a block diagram illustrating the structure of a portable telephone 20 according to a second embodiment of the present invention;
FIG. 4 is a conceptual diagram for explaining the operation attributes of application programs during startup according to the second embodiment;
FIG. 5 is a conceptual diagram showing an example of a management table 40 managed by a memory management section 29-3 according to the second embodiment;
FIG. 6 is a flowchart for explaining a power saving operation transition processing of a power saving control section 29-1 according to the second embodiment;
FIG. 7 is a flowchart for explaining operation of an operation attributes management section 29-2 according to the second embodiment;
FIG. 8 is a flowchart for explaining operation of the memory management section 29-3 according to the second embodiment;
FIG. 9 is a conceptual diagram illustrating an example of memory location for each operation attribute according to a relocation control section 29-5 of the second embodiment;
FIG. 10 is a flowchart for explaining operation of a usage restriction control section 29-4 according to the second embodiment;
FIG. 11 is a conceptual diagram illustrating the transition circumstances for a power saving state in memory area of the portable telephone 20 according to the second embodiment; and
FIG. 12 is a flowchart for explaining operation when an application program is started by a user in the portable telephone 20 according to the second embodiment.

### DESCRIPTION OF EMBODIMENTS

Hereinafter, embodiments of the present invention will be described with reference to the accompanying drawings.

### A. First Embodiment

The first embodiment of the present invention will hereinafter be described in detail.

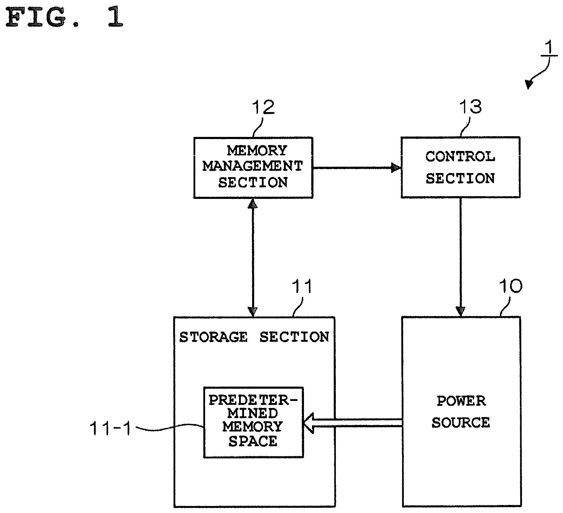

FIG. 1 is a block diagram illustrating the structure of an electronic apparatus 1 according to a first embodiment of the present invention.

In FIG. 1, an electronic apparatus 1 is equipped with a power source 10, a storage section 11, a memory management section 12, and a control section 13. As the power source 10 a regulated power source converted into direct current voltage from a commercial power source may be sufficient, a secondary electric cell (battery) which is rechargeable may be used or a primary electric cell (battery) may be used. The storage section 11 is composed of a non-volatile memory, an SD card, etc., and provides a work area for application programs to operate. The storage area 11 is provided with a predetermined memory space 11-1. According to the first embodiment, the power supply/shutoff from the power source 10 for the predetermined memory space 11-1 is controllable under the control of the control section 13 described below.

The memory management section 12 judges operation condition of an application program which has been started, and locates (movement) the application program in the predetermined memory space 11-1 of the storage section 11, when judged to be a predetermined operation condition. Here, a predetermined operation condition is equivalent to a condition where an application has been started, but is not executing any operation (for example, communications processing, etc.) either continuously (continually) or intermittently (periodically) (i.e., not operating). The control section 13 controls the power supply/shutoff from the power source 10 to the predetermined memory space. In particular, the control section 13 suspends the power supply to the predetermined memory space 11-1 from the power source 10.

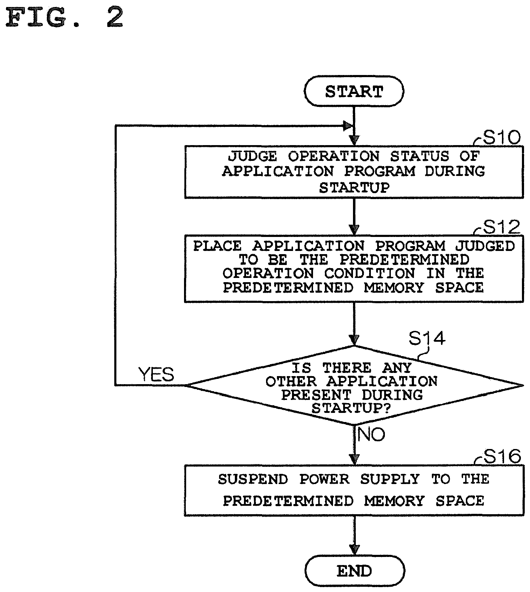

FIG. 2 is a flowchart for explaining operation of the electronic apparatus 1 according to the first embodiment. Initially, the memory management section 12 judges the operation condition of an application program during startup (Step S10), and locates (movement) the application program in the predetermined memory space 11-1 of the storage section 11, when judged to be the predetermined operation condition (Step S12). Next, processing judges whether there is any other application programs present during startup (Step S14).

When there is another application program present during startup (YES at Step S14), processing reverts back to Step S10, and the application program during startup is located (moved) in the predetermined memory space 11. In regard to an application program which is not in the predetermined operation condition, assignment to the predetermined memory space 11-1 is not executed. Conversely, as for an application program during startup, when judgment of the operation condition and assignment to the predetermined memory space have been completed (NO at Step 14), the control section 13 suspends the power supply from the power source 10 to the predetermined memory space 11-1 (Step S16), and processing ends.

According to the above first embodiment, the operation condition of an application program which has been started is judged. Subsequently, an application program judged to be in the predetermined operation condition is located (moved) in the predetermined memory space 11-1 of the storage section 11, and the power supply to the predetermined memory space 11-1 is suspended. As a result, power consumption in memory can be reduced.

### B. Second Embodiment

A second embodiment of the present invention will hereinafter be described in detail.

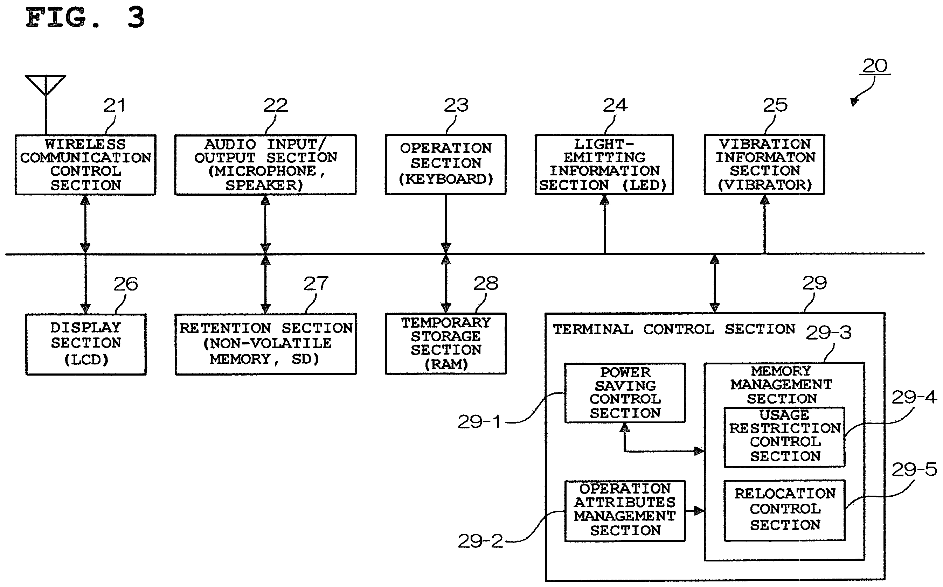

FIG. 3 is a block diagram illustrating the structure of a portable telephone 20 according to a second embodiment. In FIG. 3, a portable telephone 20 is provided with a wireless communication control section 21, an audio input/output section 22, an operation section 23, a light-emitting information section 24, a vibration information section 25, a display section 26, a retention section 27, a temporary storage section 28 and a terminal control section 29. The wireless communication control section 21 manages wireless communication control of the portable telephone 20, and external exchanges concerning information controlled by the terminal control section 29. The audio input/output section 22 is for audio input/output devices, such as a microphone, speaker, etc. The operation section 23 is for input devices, such as a hard keyboard, touch sensor, etc. The light-emitting information section 24 is a state notification device composed of a lamp, LED, etc. and notifies a state by lighting.

The vibration information section 25 notifies a state by vibration with a vibrator, etc. The display section 26 is a display device, such as black and white or color liquid crystal display, and shows a user operation result and each state of the portable telephone 20. The retention section 27 is a storage device composed of a non-volatile memory, an SD card, etc., which retains the control information of the portable telephone 20, data created by the user, and/or information received externally. The temporary storage section 28 is a RAM, etc. , which serves as a work area for a program to operate.

The terminal control section 29 controls each section mentioned above and actualizes a series of operations as a portable telephone. Further, the terminal control section 29 is equipped with a power saving control section 29-1, an operation attributes management section 29-2, and a memory management section 29-3. The power saving control section 29-1 monitors the battery remaining amount and transmits to the memory management section 29-3 a power saving operation transition instruction which directs the transition to a power saving operation, when the battery remaining amount is equal to or less than a specified value; and a normal operation transition instruction which directs the release of a power saving operation to a normal operation, when the battery remaining amount is more than a specified value.

The operation attributes management section 29-2 monitors the operation condition of an application program during operation, and determines its operation attribute (SYS attribute, temp attribute, period attribute). The memory management section 29-3 controls the transition to a power saving operation or the release of a power saving operation to a normal operation according to an instruction from the power saving control section 29-1. The memory management section 29-3 performs memory management for application programs during operation as in the following.

The memory management section 29-3 divides the memory area into a plurality of memory areas, and manages each memory area as a SYS designated area, a temp designated area and a period designated area. In the second embodiment, because the power supply is controlled for each above-stated memory areas, it is preferable to set up a memory area for each memory chip (semiconductor chip) . Because the power supply is controlled by matching a memory chip (semiconductor chip) and a memory area for each memory chip, the power supply to a memory area becomes controlled. The memory management section 29-3 monitors programs periodically during startup and which are reallocated corresponding to the operation attribute of the program during startup in the predetermined area of memory where programs of the same operation attribute have been assigned by the same attribute.

According to the second embodiment, three attributes, a SYS attribute, a temp attribute and a period attribute are provided as an operation attribute of a program. The SYS attribute is a system program related to an operating system, etc. The temp attribute is an application program which operates temporarily without periodic operation. The period attribute performs information and communications, etc. periodically and which executes some kind of processing.

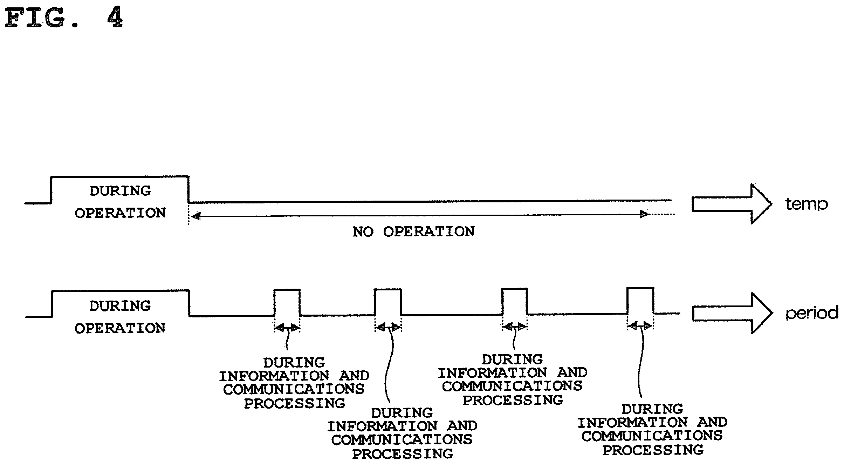

FIG. 4 is a conceptual diagram for explaining operation attributes of application programs during startup according to the second embodiment. Because an application program of the upper row does not have periodic operation and operates temporarily, it is categorized as a temp attribute. On the other hand, because an application program of the lower row executes information and communications processing periodically, it is categorized as a period attribute. Additionally, in the second embodiment, an application program is categorized as a temp attribute at the initial startup time and subsequently categorized as a period attribute when there is some kind of operation before a predetermined time Ti elapses. However, the application program is fixed as a temp attribute when a predetermined time Ti elapses and there has been no operation.

The memory management section 29-3 relocates system programs during startup of a SYS attribute to the SYS designated area. Also, the memory management section 29-3 relocates application programs of a temp attribute to the temp designated area. Additionally, the memory management section 29-3 reallocates application programs of a period attribute to the period designated area.

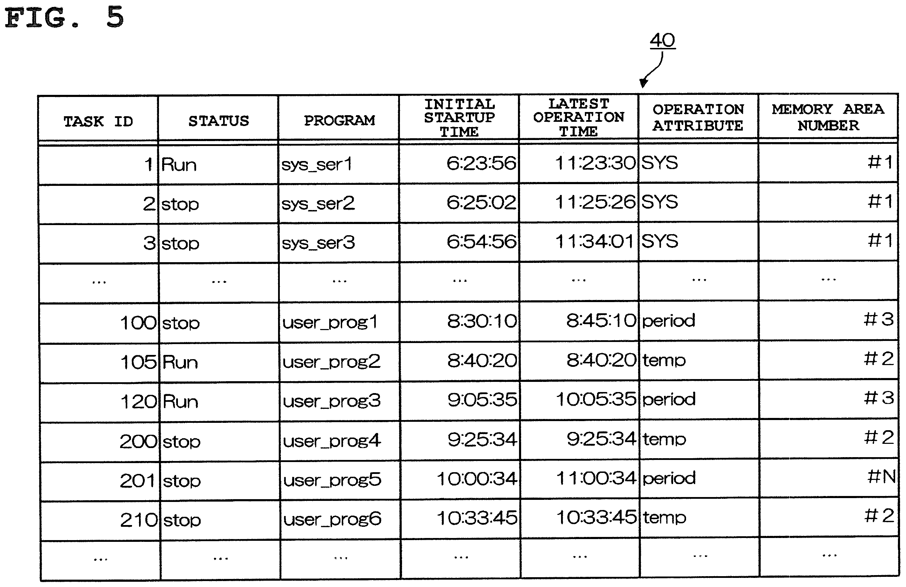

The memory management section 29-3 includes a usage restriction control section 29-4 and a relocation control section 29-5. Upon receiving a power saving operation transition instruction from the power saving control section 29-1, the usage restriction control section 29-4 refers to a management table 40 (FIG. 5) described below. When a temp attribute application program (also called a task) has been started, all of the temp attribute application programs are closed and the power source of the temp memory area is turned off.

The relocation control section 29-5 is judged by the operation attributes management section 29-2 with reference to the operation attributes reflected in the management table 40 (FIG. 5) described below, wherein an application program of a temp attribute is relocated to memory area #2 for temp designation, and wherein an application program of a period attribute is relocated to memory area #3 for period designation and consolidates the memory use condition. After relocation, the relocation control section 29-5 updates the memory area number of an applicable application program (task).

FIG. 5 is a conceptual diagram showing an example of the management table 40 managed by the memory management section 29-3 according to the second embodiment. The management table 40 maintains the status (operation condition), program species, initial startup time, latest operation time, operation attribute, and memory area number for each program (task) during startup. For example in the diagram, the TASK ID "105" PROGRAM of "user_prog2" is currently in operation (run) with OPERATION ATTRIBUTE "temp" and managed by MEMORY AREA NUMBER "#2". Also, the TASK ID "201" PROGRAM of "user_prog5" is currently in suspension (stop) with OPERATION ATTRIBUTE "period" and managed by MEMORY AREA NUMBER "#N".

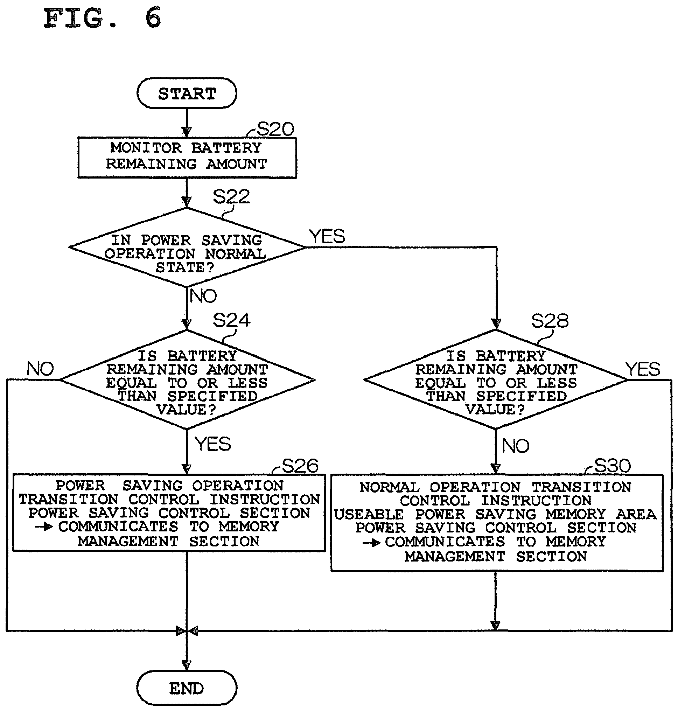

FIG. 6 is a flowchart for explaining a power saving operation transition processing of a power saving control section 29-1 according to the second embodiment. The power saving control section 29-1 monitors the battery remaining amount (Step S20) and discriminates whether or not in a power saving operation state (Step S22). Then, when discriminated as not being in a power saving operation state (NO at Step S22), the power saving control section 29-1 judges whether or not the battery remaining amount is equal to or less than a specified value (Step S24). Here, when the battery remaining amount is equal to or less than a specified value (YES at Step S24), the power saving control section 29-1 communicates a power saving operation transition control instruction to the memory management section 29-3 (Step S26), and processing ends. According to the power saving operation transition control instruction, the memory management section 29-3 performs power source control of the memory area, and transitions to a power saving operation. Conversely, when the battery remaining amount is more than a specified value (NO at Step S24), nothing is executed, and processing ends.

On the contrary, when discriminated as being in a power saving operation state (YES at Step S22), the power saving control section 29-1 judges whether or not the battery remaining amount is equal to or less than a specified value (Step S28). When the battery remaining amount is equal to or less than a specified value (YES at Step S28), nothing is executed, and processing ends.

On the other hand, when the battery remaining amount is more than a specified value (NO at Step S28), the power saving control section 29-1 communicates a normal operation transition control instruction to the memory management section 29-3 (Step S30), and processing ends. According to the normal operation transition control instruction, the memory management section 29-3 performs power source control of the memory area in which power saving is being performed, which releases a power saving operation and transitions to a normal operation.

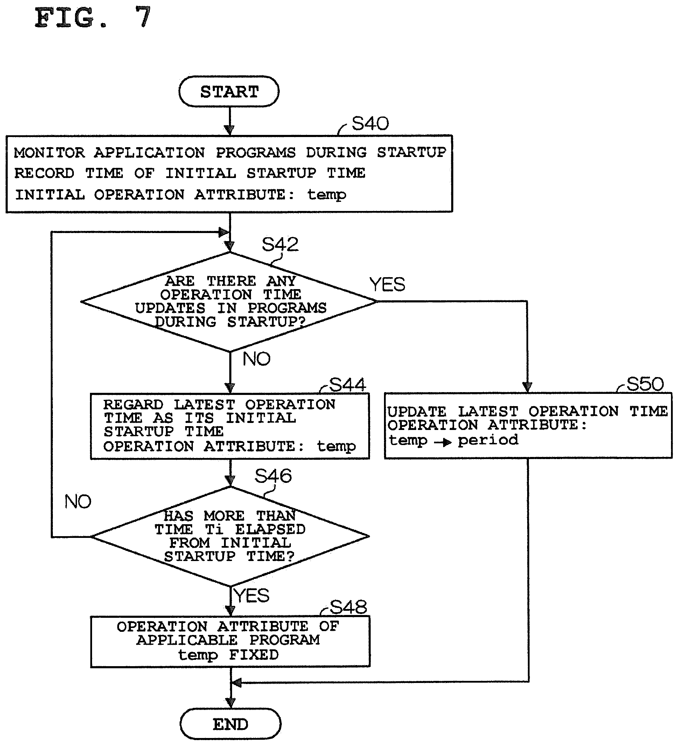

FIG. 7 is a flowchart for explaining operation of an operation attributes management section 29-2 according to the second embodiment. The operation attributes management section 29-2 monitors the startup of application programs periodically. Then, when there is a startup of an application program, the operation attributes management section 29-2 will record the start time (initial startup time) of the application program which has been started, and will designate the operation attribute as temp (Step S40).

Next, when application programs are started, the operation attributes management section 29-2 will monitor the application programs which have been started periodically. Also, the operation attributes management section 29-2 confirms whether or not there are any operation time updates in the application programs during startup (Step S42).

Here, when there are no updates for the operation time (NO at Step S42), the operation attribute is designated as temp for the latest operation time as the startup time for clocking time (Step S44). Next, processing judges whether or not more than time Ti has elapsed from the initial startup time (Step S46). Time Ti is a discretionarily specified time and may be interpreted as that which does not consider an application program which performs information and communications periodically. For example, more than 18 hours, etc. is acceptable.

Then, when the elapsed time from an initial startup time is less than time Ti (NO at Step S46), processing reverts to Step S42 without executing anything. Conversely, when the elapsed time from an initial startup time is equal to or more than time Ti (YES at Step S46), the operation attribute for the applicable program is fixed as temp (Step S48), and ends the processing.

Again, in an application program during startup, when there is updating of operation time (YES at Step S42), the latest operation time is updated, and the operation attribute is changed to period from temp (Step S50), and ends the processing.

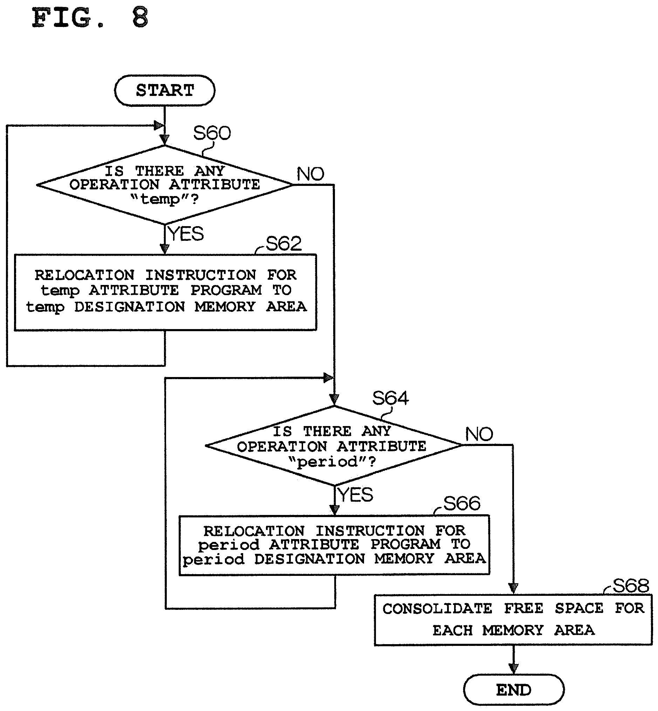

FIG. 8 is a flowchart for explaining operation of the memory management section 29-3 according to the second embodiment. The memory management section 29-3 judges whether or not there is any program with an operation attribute "temp" among the currently started application programs (Step S60) with reference to the management table 40 shown in FIG. 5. Then, when there is a program with an operation attribute "temp" (YES at Step S60), the memory management section 29-3 sends a relocation instruction to the relocation control section 29-5 so that the program with the operation attribute "temp" will be relocated to the memory area for temp designation (Step S62). Subsequently, processing reverts back to Step S60.

The relocation control section 29-5 receives the relocation instruction and relocates an applicable application program to the memory area for temp designation. As long as there is a program with an operation attribute "temp", the memory management section 29-3 and the relocation control section 29-5 repeat relocation to the memory area for temp designation of an applicable program.

Conversely, when there is no program of an operation attribute "temp", processing judges whether or not (NO at Step S60) the memory management section 29-3 contains a program of an operation attribute "period" (Step S64) with reference to the management table 40 shown in FIG. 5. Then, when there is a program with an operation attribute "period" (YES at Step S64), the memory management section 29-3 sends a relocation instruction to the relocation control section 29-5 so that the program with the operation attribute "period" will be relocated to the memory area for period designation (Step S66) . Subsequently, processing reverts back to Step S64.

The relocation control section 29-5 receives the relocation instruction and relocates an applicable program to the memory area for period designation. Then, as long as there is a program with an operation attribute "period", the memory management section 29-3 and the relocation control section 29-5 repeat relocation to the memory area for period designation of an applicable program.

Conversely, when there is no program of an operation attribute "period" (NO at Step S64), the memory management section 29-3 consolidates and optimizes the free space for each memory area (Step S68). Subsequently, processing ends. In addition, the aforesaid consolidation and optimization of the free space uses a well-known technology.

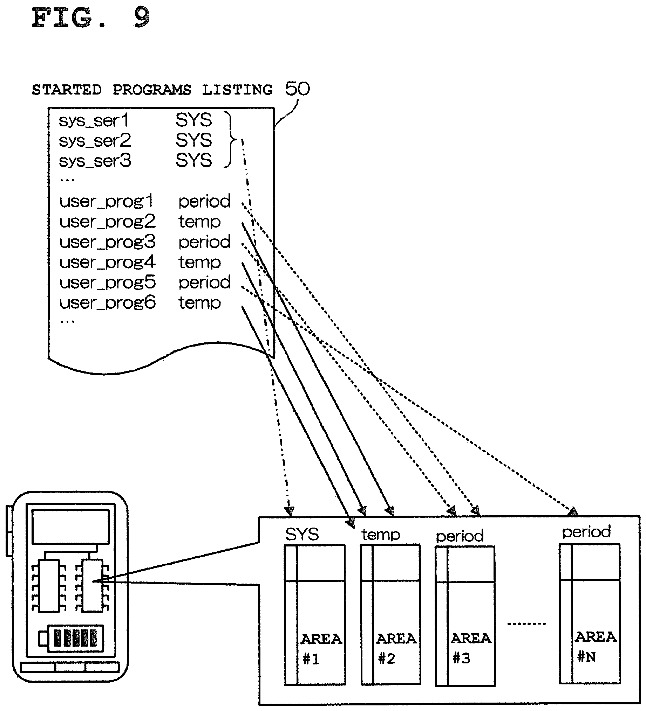

FIG. 9 is a conceptual diagram illustrating an example of the memory location for each operation attribute according to the relocation control section 29-5 of the second embodiment. When the operation attribute for started application programs (arbitrary free space in memory area at startup time) has been judged, the relocation control section 29-5 executes relocation of respective application programs from the startup memory area to the memory area designated for each operation attribute. The relocation control section 29-5 relocates according to the operation attribute judged by the operation attributes management section 29-2. For example as illustrated in the diagram, the started programs listing 50 shows a situation where SYS attribute programs sys_ser1 ∼ sys_ser3 are relocated to memory area #1 designated as SYS attribute, temp attribute programs user_prog2, user_prog4 and user_prog6 are relocated to memory area #2 designated as temp attribute, period attribute programs user_prog1, user_prog3 are relocated to memory area #3 designated as period attribute and period attribute program user_prog5 is relocated to memory #N designated as period attribute.

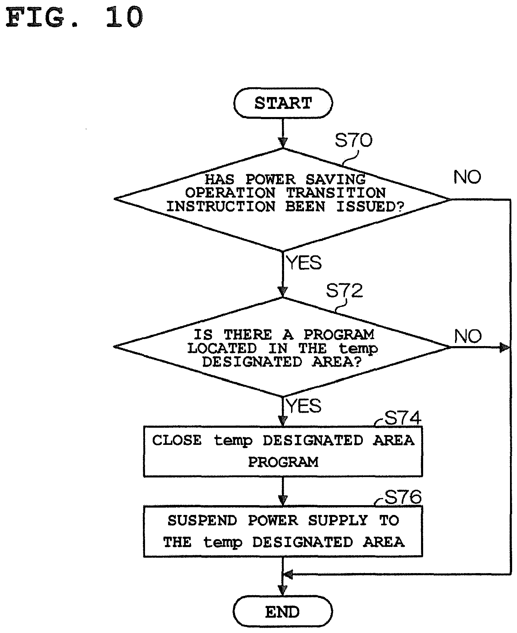

FIG. 10 is a flowchart for explaining operation of a usage restriction control section 29-4 according to the second embodiment. The usage restriction control section 29-4 judges whether or not a power saving operation transition instruction has been issued from the power saving control section 29-1 (Step S70), and when no power saving operation transition instruction has been issued (NO at Step S70), nothing is executed and processing ends. Conversely, when a power saving transition instruction has been issued from the power saving control section 29-1 (YES at Step S70), the usage restriction control section 29-4 judges whether or not there are any programs located in the temp designated area (Step S72) with reference to the management table 40 shown in FIG. 5.

Then, when there are no programs located in the temp designated area (NO at Step S72), nothing is executed and processing ends. Conversely, when there are programs located in the temp designated area (YES at S72), the usage restriction control section 29-4 closes the temp attribute application programs (Step S74). Subsequently after closing all temp attribute programs, the usage restriction control section 29-4 turns off the power supply to the temp designated area (Step S76) .

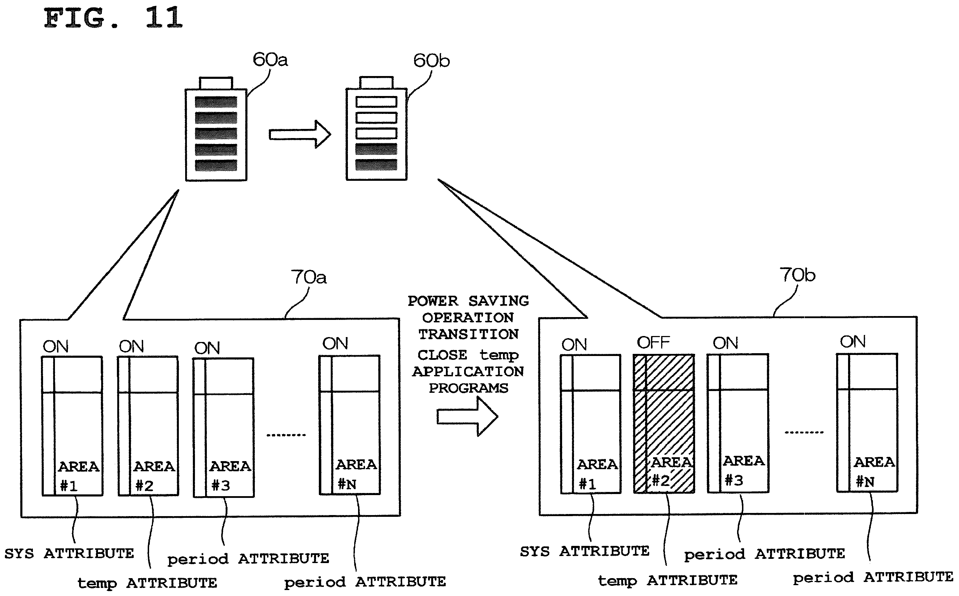

FIG. 11 is a conceptual diagram illustrating the transition circumstances for a power saving state in memory area of the portable telephone 20 according to the second embodiment. When the battery remaining amount is in a full state 60a, the portable telephone 20 operates in a normal state 70a in which the power source is supplied to all of area #1, area #2, area #3, ..., area #N. A SYS attribute program is located in area #1, a temp attribute application program is located in area #2, and further a period attribute application program is located in area #3. When the battery remaining amount becomes a state 60b of less than a specified value from such as the battery remaining amount in the full state 60a, processing will close the temp attribute programs located in area #2 and shut down (turn off) the power supply of the temp designated area #2. Accordingly, by the power saving state 70b in FIG. 11, the power consumption amount of the temp designated area #2 saves electricity by shutting down the power supply of the temp designated area #2.

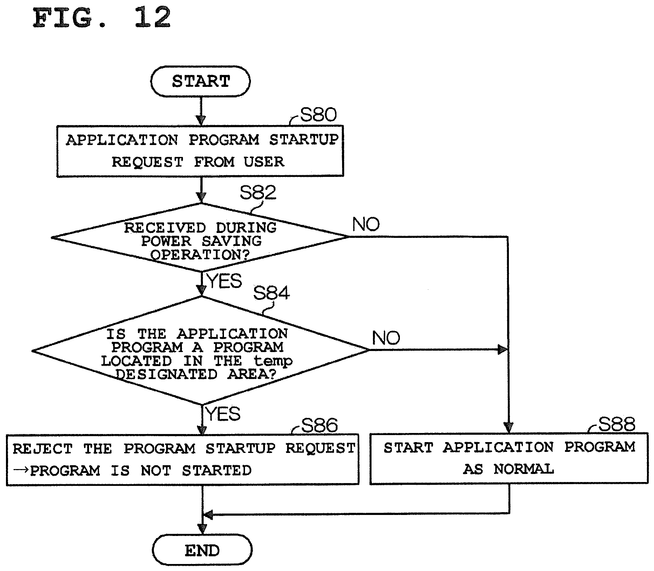

FIG. 12 is a flowchart for explaining operation when an application program is started by a user in the portable telephone 20 according to the second embodiment. When the terminal control section 29 receives an application program startup request from the user (Step S80), processing judges whether or not received during a power saving operation (Step S82). Then, when received during a power saving operation (YES at S82), processing judges whether or not the application program having a startup request is a program located in the temp designated area (Step S84) with reference to the management table 40 shown in FIG. 5.

Then, when the application program is a program located in the temp designated area, and in other words, when the application program is a temp attribute program (YES at Step S84), the application program having a startup request is rejected (Step S86), and processing ends. Namely, in this situation the application program is not started.

Conversely, when received but not during a power saving operation (NO at Step S82), or when received during a power saving operation (YES at Step S82) and the program is not a temp attribute program (NO at Step S84), the application program having a startup request is started as normal (Step S88), and processing ends.

According to the second embodiment, processing judges the operation attribute of an application program which has been started. Although started, a temp attribute application program not executing any operation is relocated to the temp designated area. Because processing suspends the power supply to the temp designated area after suspending the application program located in the temp designated area, power consumption in memory can be reduced.

Also, according to the second embodiment, when the battery remaining amount becomes less than a specified value in a portable terminal device of the type which operates with a battery, while closing an application program and suspending the power supply to the memory area which the application program was using, power consumption in memory can be reduced and the usable time of the battery can be extended.

Further, according to the second embodiment, processing judges the operation attribute of an application program, based on whether or not some kind of operation (for example, periodic communications processing, etc.) is executed continuously (continually) or intermittently (periodically). Because processing relocates each operation attribute to an exclusive memory area, the user can close application programs with few disadvantages. Even if merely compared with a conventional method of suspending the power supply to free space, the effect of suppressing power consumption can be expected.

Still further, according to the second embodiment, in the event that an application program startup request is received during continuation of a power saving operation and the application program is a program assigned to a predetermined memory space, the application having a startup request will not be started. Since processing is not necessary to be performed accompanied by power consumption, such as relocation to a memory area and controlling the power supply, etc., the effect of suppressing power consumption can be expected.

In the above-described first and second embodiments, even though memory usage restriction (suspension of the power supply)
is executed the moment the battery remaining amount becomes equal to or less than a specified value, a power saving operation mode is established. When a power saving operation is turned ON, processing transitions to a memory usage restriction state, and which also can be turned OFF to release the usage restriction state. The power saving operation mode can be caused to transition in operation, etc. by the user and, when in a non-operating condition, etc., also can be caused to transition automatically and continue for more than a predetermined time.

Additionally, in the case of the electronic device which uses a commercial power source, the moment of the battery remaining amount is not performed; however, a power saving operation mode is established. When the power saving operation mode is turned ON, processing transitions to a memory usage restriction state, and which also can be turned OFF to release the usage restriction state. Also, in this case the power saving operation mode can be caused to transition in operation, etc. by the user and, when in a non-operating condition, etc., also can be caused to transition automatically and continue for more than a predetermined time.

Moreover, according to the second embodiment as described above, the management table 40 shown in FIG. 5 was used, where separate operation attributes are established, subdivided, given a ranking and relocated to a memory area. Further, by providing a stage in the middle of the specified value (threshold) for the battery remaining amount, it is also possible to perform greater control of the power supply in stages.

Additionally, in the above-mentioned second embodiment, although a portable telephone serves as an example of an electronic device, the present invention is not limited to this and is also widely applicable to a game machine, a digital camera, a tablet PC (Personal Computer), a PDA (Personal Data Assistant: portable information terminal), a personal computer, a communication apparatus, other electronic devices, etc.

This application is based upon and claims the benefit of priority from the prior Japanese Patent Application No. 2013-042349 filed March 4, 2013.

### DESCRIPTION OF REFERENCE NUMERALS

- 1: Electronic apparatus
- 10: Power source
- 11: Storage section
- 11-1: Predetermined memory space
- 12: Memory management section
- 13: Control section
- 20: Portable telephone
- 21: Wireless communication control section
- 22: Audio input/output section
- 23: Operation section
- 24: Light-emitting information section
- 25: Vibration information section
- 26: Display section
- 27: Retention section
- 28: Temporary storage section
- 29: Terminal control section
- 29-1: Power saving control section
- 29-2: Operation attributes management section
- 29-3: Memory management section
- 29-4: Usage restriction control section
- 29-5: Relocation control section
- 40: Management table

## Claims

1. An electronic apparatus (1) comprising:
a storage section (11) which has a predetermined memory space (11-1);
a memory management section (12) operable to judge the operation condition of an application program and locate the application program in the predetermined memory space (11-1), when it is judged to be in a predetermined operation condition; and
a control section (13; 29) operable to suspend power supply to the predetermined memory space (11-1),
wherein
the memory management section (12 ,29-3) is operable to judge the condition in which the application program has not executed any operation either continuously or intermittently to be the predetermined operation condition.

2. The electronic apparatus (1) according to claim 1, **characterized in that** the memory management section (12, 29-3) is operable to judge the existence of the predetermined operation condition, when the application program has not executed any operation and more than a predetermined time has elapsed since an initial startup time.

3. The electronic apparatus (1) according to claim 1 or 2, **characterized in that** a power source (10) is a battery comprising a primary electric cell or a secondary electric cell, and
**characterized in that** the control section (13; 29) further comprises:
a power saving control section (29-1) operable to direct transition to a power saving operation, when the remaining amount of the battery is equal to or less than a specified value; and
a usage restriction control section (29-4) operable to suspend the power supply to the predetermined memory space (11-1), when transition to a power saving operation is directed from the power saving control section (29-1).

4. The electronic apparatus (1) according to claim 3, **characterized in that** the power saving control section (29-1) is operable to direct transition to a power saving operation mode based on a user instruction operation.

5. The electronic apparatus (1) according to claim 3 or 4, **characterized in that** the usage restriction control section (29-4) is operable to suspend the power supply of the predetermined memory space (11-1) after closing the application program located in the predetermined memory space (11-1).

6. The electronic apparatus (1) according to any one of claims 3 to 5, **characterized in that** the control section (13; 29) is operable to not start up the application program having the startup request, when an application program startup request occurs during continuation of power saving operation and if the application program is a program located in the predetermined memory space (11-1).

7. A power supply control method, including:
a step of assigning a predetermined memory space (11-1) in a storage section (11) of an electronic apparatus;
a step of judging the operation condition of an application program and locating the application program in the predetermined memory space (11-1), when it is judged to be in a predetermined operation condition; and
a step of suspending power supply to the predetermined memory space (11-1), wherein the condition in which the application program has not executed any operation either continuously or intermittently is judged to be the predetermined operation condition.

8. A program causing a computer of an electronic apparatus (1) comprising a storage section (11) to execute:
a function of assigning a predetermined memory space (11-1) in the storage section (11);
a function of judging the operation condition of an application program and locating the application program in the predetermined memory space (11-1), when it is judged to be in a predetermined operation condition; and
a function of suspending power supply to the predetermined memory space (11-1), wherein the condition in which the application program has not executed any operation either continuously or intermittently is judged to be the predetermined operation condition.

## Patentansprüche

1. Elektronische Vorrichtung (1), die aufweist:
einen Speicherabschnitt (11), der einen vorgegebenen Speicherplatz (11-1) aufweist,
einen Speicherverwaltungsabschnitt (12), der in der Lage ist, den Betriebszustand eines Anwendungsprogramms festzustellen und das Anwendungsprogramm im vorgegebenen Speicherplatz (11-1) zu lokalisieren, wenn festgestellt wird, dass es in einem vorgegebenen Betriebszustand ist, und
einen Steuerabschnitt (13; 29), der in der Lage ist, die Stromzufuhr zum vorgegebenen Speicherplatz (11-1) zu unterbrechen,
wobei der Speicherverwaltungsabschnitt (12, 29-3) in der Lage ist, den Zustand, in dem das Anwendungsprogramm weder kontinuierlich noch intermittierend einen Betriebsvorgang ausgeführt hat, als den vorgegebenen Betriebszustand festzustellen.

2. Elektronische Vorrichtung (1) nach Anspruch 1,
**dadurch gekennzeichnet, dass** der Speicherverwaltungsabschnitt (12, 29-3) in der Lage ist, die Existenz des vorgegebenen Betriebszustands festzustellen, wenn das Anwendungsprogramm seit einer anfänglichen Startzeit keinen Betriebsvorgang ausgeführt hat und mehr als eine vorgegebene Zeit verstrichen ist.

3. Elektronische Vorrichtung (1) nach Anspruch 1 oder 2,
**dadurch gekennzeichnet, dass** eine Stromquelle (10) eine Batterie ist, die eine primäre elektrische Zelle oder eine sekundäre elektrische Zelle aufweist,
**dadurch gekennzeichnet, dass** der Steuerabschnitt (13; 29) ferner aufweist:
einen Stromspar-Steuerabschnitt (29-1), der in der Lage ist, einen Übergang zu einem Stromsparbetrieb anzuweisen, wenn die Restmenge der Batterie gleich einem spezifizierten Wert oder kleiner als dieser ist, und
einen Verwendungsbeschränkungs-Steuerabschnitt (29-4), der in der Lage ist, die Stromzufuhr zum vorgegebenen Speicherplatz (11-1) zu unterbrechen, wenn der Übergang zu einem Stromsparbetrieb vom Stromspar-Steuerabschnitt (29-1) angewiesen wird.

4. Elektronische Vorrichtung (1) nach Anspruch 3,
**dadurch gekennzeichnet, dass** der Stromspar-Steuerabschnitt (29-1) in der Lage ist, einen Übergang zu einem Stromspar-Betriebsmodus auf der Grundlage einer Benutzerbefehlsoperation anzuweisen.

5. Elektronische Vorrichtung (1) nach Anspruch 3 oder 4,
**dadurch gekennzeichnet, dass** der Verwendungsbeschränkungs-Steuerabschnitt (29-4) in der Lage ist, die Stromzufuhr zum vorgegebenen Speicherplatz (11-1) nach dem Schließen des sich im vorgegebenen Speicherplatz (11-1) befindenden Anwendungsprogramms zu unterbrechen.

6. Elektronische Vorrichtung (1) nach einem der Ansprüche 3 bis 5, **dadurch gekennzeichnet, dass** der Steuerabschnitt (13; 29) in der Lage ist, das Anwendungsprogramm mit der Startanforderung nicht zu starten, wenn während einer Fortsetzung des Stromsparbetriebs eine Anwendungsprogramm-Startanforderung auftritt und wenn sich das Anwendungsprogramm im vorgegebenen Speicherplatz (11-1) befindet.

7. Stromversorgungs-Steuerverfahren, das aufweist:
einen Schritt zum Zuweisen eines vorgegebenen Speicherplatzes (11-1) in einem Speicherabschnitt (11) einer elektronischen Vorrichtung,
einen Schritt zum Feststellen des Betriebszustands eines Anwendungsprogramms und zum Lokalisieren des Anwendungsprogramms im vorgegebenen Speicherplatz (11-1), wenn festgestellt wird, dass es in einem vorgegebenen Betriebszustand ist, und
einen Schritt zum Unterbrechen der Stromzufuhr zum vorgegebenen Speicherplatz (11-1),
wobei der Zustand, in dem das Anwendungsprogramm weder kontinuierlich noch intermittierend einen Betriebsvorgang ausgeführt hat, als der vorgegebene Betriebszustand festgestellt wird.

8. Programm, das einen Computer einer elektronischen Vorrichtung (1), die einen Speicherabschnitt (11) aufweist, veranlasst, Folgendes auszuführen:
eine Funktion zum Zuweisen eines vorgegebenen Speicherplatzes (11-1) im Speicherabschnitt (11),
eine Funktion zum Feststellen des Betriebszustands eines Anwendungsprogramms und zum Lokalisieren des Anwendungsprogramms im vorgegebenen Speicherplatz (11-1), wenn festgestellt wird, dass es in einem vorgegebenen Betriebszustand ist, und
eine Funktion zum Unterbrechen der Stromzufuhr zum vorgegebenen Speicherplatz (11-1),
wobei der Zustand, in dem das Anwendungsprogramm weder kontinuierlich noch intermittierend einen Betriebsvorgang ausgeführt hat, als der vorgegebene Betriebszustand festgestellt wird.

## Revendications

1. Appareil électronique (1) comprenant :
une section de stockage (11) qui a un espace de mémoire prédéterminé (11-1)
une section de gestion de mémoire (12) utilisable pour déterminer une condition de fonctionnement d'un programme d'application et localiser le programme d'application dans l'espace de mémoire prédéterminé (11-1), lorsqu'on estime qu'il est dans une condition de fonctionnement prédéterminée ; et
une section de commande (13 ; 29) utilisable pour interrompre l'alimentation électrique de l'espace de mémoire prédéterminé (11-1),
dans lequel
la section de gestion de mémoire (12, 29-3) est utilisable pour déterminer la condition dans laquelle le programme d'application n'a exécuté aucune opération soit en continu soit par intermittence, comme étant la condition de fonctionnement prédéterminée.

2. Appareil électronique (1) selon la revendication 1,
**caractérisé en ce que** la section de gestion de mémoire (12, 29-3) est utilisable pour déterminer l'existence de la condition de fonctionnement prédéterminée, lorsque le programme d'application n'a exécuté aucune opération et qu'une durée supérieure à une durée prédéterminée s'est écoulée depuis un instant de démarrage initial.

3. Appareil électronique (1) selon la revendication 1 ou 2,
**caractérisé en ce qu'**une source d'alimentation (10) est une batterie comprenant une cellule électrique primaire ou une cellule électrique secondaire, et
**caractérisé en ce que** la section de commande (13 ; 29) comprend en outre :
une section de commande d'économie d'énergie (29-1) utilisable pour ordonner un passage à une opération d'économie d'énergie, lorsque la quantité restante de la batterie est inférieure ou égale à une valeur spécifiée ; et
une section de commande de restriction d'utilisation (29-4) utilisable pour interrompre l'alimentation électrique de l'espace de mémoire prédéterminé (11-1), lorsqu'un passage à une opération d'économie d'énergie est ordonné par la section de commande d'économie d'énergie (29-1).

4. Appareil électronique (1) selon la revendication 3, **caractérisé en ce que** la section de commande d'économie d'énergie (29-1) est utilisable pour ordonner un passage à un mode d'opération d'économie d'énergie sur la base d'une opération d'instruction utilisateur.

5. Appareil électronique (1) selon la revendication 3 ou 4, **caractérisé en ce que** la section de commande de restriction d'utilisation (29-4) est utilisable pour interrompre l'alimentation électrique de l'espace de mémoire prédéterminé (11-1) après fermeture du programme d'application situé dans l'espace de mémoire prédéterminé (11-1).

6. Appareil électronique (1) selon l'une quelconque des revendications 3 à 5, **caractérisé en ce que** la section de commande (13 ; 29) est utilisable pour ne pas démarrer le programme d'application ayant la requête de démarrage, lorsqu'une requête de démarrage de programme d'application se produit pendant la poursuite d'une opération d'économie d'énergie et si le programme d'application est un programme situé dans l'espace de mémoire prédéterminé (11-1).

7. Procédé de commande d'alimentation électrique comportant :
une étape d'attribution d'un espace de mémoire prédéterminé (11-1) dans une section de stockage (11) d'un appareil électronique ;
une étape de détermination de la condition de fonctionnement d'un programme d'application et localisation du programme d'application dans l'espace de mémoire prédéterminé (11-1), lorsqu'on détermine qu'il est une condition de fonctionnement prédéterminée ; et
une étape d'interruption de l'alimentation électrique de l'espace de mémoire prédéterminé (11-1),
dans lequel
la condition dans laquelle le programme d'application n'a exécuté aucune opération soit en continu soit par intermittence est déterminée comme étant la condition de fonctionnement prédéterminée.

8. Programme amenant un ordinateur d'un appareil électronique (1) comprenant une section de stockage (11) à exécuter :
une fonction d'attribution d'un espace de mémoire prédéterminé (11-1) dans la section de stockage (11) ;
une fonction de détermination de la condition de fonctionnement d'un programme d'application et localisation du programme d'application dans l'espace de mémoire prédéterminé (11-1), lorsqu'on détermine qu'il est dans une condition opérationnelle prédéterminée ; et
une fonction d'interruption de l'alimentation électrique de l'espace de mémoire prédéterminé (11-1),
dans lequel
la condition dans laquelle le programme d'application n'a exécuté aucune opération soit en continu soit par intermittence est déterminée comme étant la condition de fonctionnement prédéterminée.
